# EUROPEAN PATENT SPECIFICATION

(11) **EP 2 487 432 B1**
(45) Date of publication and mention of the grant of the patent: **05.09.2018**
(21) Application number: 10821605.2
(22) Date of filing: 04.10.2010
(51) Int. Cl.: F24S 10/40, F24S 40/46

(54) **NON-EVAPORABLE GETTER**
NICHT-VERDAMPFBARER GETTER
GETTER NON-ÉVAPORABLE

(30) Priority: 05.10.2009 ES 200901948
(43) Date of publication of application: 15.08.2012
(73) Proprietor: Abengoa Solar New Technologies, S.A., 41018 Sevilla (ES)
(72) Inventor: MARTÍNEZ SANZ, Noelia, E-41014 Sevilla (ES); ASENSIO PÉREZ ULLIVARRI, Javier, E-41014 Sevilla (ES); BOMBIN ORTEGA, Pablo José, E-41014 Sevilla (ES); PELÁEZ FOMBELLIDA, Javier, E-41014 Sevilla (ES); RICO SÁNCHEZ, José Ángel, E-41014 Sevilla (ES); CRISTÓBAL RAMÍREZ, Daniel, E-41014 Sevilla (ES)
(74) Representative: Garcia-Cabrerizo y del Santo, Pedro Maria
(86) International application number: PCT/ES2010/000404
(87) International publication number: WO 2011/042578

(56) References cited:
- CN-A- 101 392 965
- CN-Y- 201 203 279
- CN-Y- 201 209 968
- ES-A1- 2 325 562
- ES-T3- 2 295 701
- GB-A- 963 598
- GB-A- 1 455 908
- JP-A- 57 019 550
- US-A1- 2007 096 649

## Description

### TECHNICAL FIELD OF THE INVENTION

The present invention describes a non-evaporable getter for solar power receptor tubes.

### BACKGROUND OF THE INVENTION

The getters are solid materials, alloys of different metals, able to chemically absorb gas molecules on their surface. They are widely used for a variety of applications such as in particle accelerators, vacuum tubes, inert gas purification systems, etc.

The non-evaporable getter of the invention will be used in a vacuum tube of the type of those that are used as solar receptors. In general, these receptors consist of two concentric tubes between which the vacuum is generated. The inner tube, through which the fluid that is heated flows, is made of metal and the outer tube is made of glass, usually borosilicate.

Between both tubes is placed an expansion-compensating device in the form of bellows, such that it allows the relative movement between the absorber tube and the glass tube, absorbing the stress created by the difference existing between the coefficients of thermal expansion of both and thereby ensuring the vacuum.

In addition to the expansion-compensating device, this type of tubes requires the installation of materials that detect and remove the hydrogen molecules that can be introduced in the vacuum area. These molecules are produced by the thermal degeneration suffered by the oil that is used as heat-transfer fluid and that circulates through the interior of the metal tube, due to the high temperatures it reaches. These molecules end up passing through the metal tube and entering the vacuum area, increasing the thermal losses and, accordingly, significantly reducing the efficiency of the system.

That is why alloys of the non-evaporable getter type are always installed in the vacuum area so that, in the event that there is any H₂ molecule, it is captured by the surface of this material.

In the developments known to the moment there are different designs of non-evaporable getters that are placed in different locations within the vacuum area.

An example is found in the patent US 2007/0034204 A1 by KUCKELKORN ET AL. In this document a non-evaporable getter is arranged in an outer annular space between the expansion-compensating device and the glass-metal transition element. The getter is protected from the incident solar radiation by the glass-metal transition element and from the reflected radiation, by the expansion-compensating device. Thus, this results in a structure which is composed radially, from inside to outside, by the metal tube, connection element, expansion-compensating device, non-evaporable getter, glass-metal transition element and glass tube.

This arrangement has a number of drawbacks such as: increase in the necessary minimum diameter of glass tube to house all those elements in its interior, subjecting the getter to mechanical stresses suffered by the expansion compensation bellows, the need to introduce the getter round pads in a sheath and with a protective mesh touching the expansion-compensating device and, in the case of needing a greater amount of material to increase the absorption, the only choice left is to increase the size or the number of pads of the getter, which implies increasing the diameter of the glass tube. Furthermore, as it is only installed on one of the two ends of the tube, it means that the tube has different geometry on both sides. Therefore, the assembly is very traditional and there is no way to automate it because in addition the pads that form the getter are thin and very fragile.

Document GB963598 discloses a getter device for maintaining the vacuum of an electron discharge tube, comprises one or more tablets of non-vaporizable getter material mounted on a perforated metal support in such a way as to leave two major surfaces of the or each tablet exposed.

Document ES2295701 relates to a getter support assembly for supporting getters in a focusing collector type solar collector system comprising a tube radiation absorber (TRA) and a glass enclosure tube, defining therebetween an annular space, and a solar radiation focusing reflector. The getter support assembly comprises a bridge formed with an elongated trough having a getter support portion. The bridge further comprising feet fixedly attached to the TRA supporting the trough so that the trough is spaced apart from the TRA.

Thus, the present invention is intended to provide a design for the non-evaporable getter of the absorber tubes that solves all these drawbacks without decreasing the efficiency of the system.

### DESCRIPTION OF THE INVENTION

The invention consists of a non-evaporable getter system for the absorption of hydrogen that could occur in the vacuum area of a solar power absorber tube.

The function of the non-evaporable getter, despite its importance, should not interfere with the main purpose of the receptor tube which is to maximize its thermal performance. Its arrangement should allow this situation without compromising its role to ensure the correct aging of the product.

As mentioned above, its placement in the state of the art, originated a different housing geometry in one of the two ends in order to house it, which in turn conditioned the value of the diameter of the glass or borosilicate cylinder.

To solve the problems found in the state of the art known, new design proposals linked to the geometry and arrangement of the non-evaporable getters assemblies have been developed.

Once the needs with regard to the amount of getter matter for tubes of 4 m in length and a plant half life of 25 years are known, if this amount is split between the two ends of the tube, by radial arrangement, it is no longer necessary to turn to its arrangement on an outer part of the receptor tube, because smaller diameter toroidal geometries would give an equivalent amount, when placing it in both ends. In this way a space that otherwise would be lost by not using more than one side of the receptor tube to place them can be optimized.

With respect to the geometry, the getter systems of the invention are formed based on square-shaped pads with rounded edges and with a central drill, all of them joined by means of a cable that is introduced by said drills. This composition avoids the need to have a sheath and a protective mesh wherein the pads are housed, as it is the case in the state of the art.

Regarding its arrangement in the tube, the possibility of placing the non-evaporable getters in the inner area of the support vessel of the expansion-compensating device, i.e., downstream the bellows in axial direction is assumed as a proposal.

In addition, in that location, the diameter of the getters ring will be smaller. The lower rope where the pads are arranged is compensated with the use of the two ends of the tube in such way that a sufficient mass of non-evaporable getter is ensured and the symmetry in the tube is achieved, since the two ends will be identical.

This symmetry (non-existent in the current solutions) entails a thermal and manufacturing advantage, thanks to the unification of components and because it allows the optimization of the tube (the void of the vessel is used at both sides of the tube and not just at one side as in the current solution).

This new arrangement also means that if you want to increase the amount of getter it is only required to increase the width of the pads, because in that respect there is enough space, without having to increase the diameter of the glass tube to add more pads, representing a saving of costs and increased efficiency by not increasing the losses.

With regard to the closure of the cable that connects all the pads, there are proposed several possibilities and all of them allow automating the process. These solutions will be described later, in the detailed description of the invention.

### DESCRIPTION OF THE DRAWINGS

To complete the description that is being carried out and in order to help to a better understanding of the invention, a set of drawings is accompanied where with illustrative character and without limitation, the following has been represented:
Figure 1. Non-evaporable getter pad
Figure 2. Binding cable of the pads with the quick-fit closure 2
Figure 3: Non-evaporable getters assemblies linked with the cable
Figure 4: Arrangement of the non-evaporable getter in the receptor tube
Figure 5: Perspective view of the assembly
Figure 6: Plant view of the assembly
Figures 7-12: Quick-fit closure 1. Views of the closure and views of the assembly
Figures 13-15: Quick-fit closure 3. Views of the closure and views of the assembly
Figures 16-18: Quick-fit closure 4. Views of the closure and views of the assembly
Figure 19: Attachment clamp

### PREFERRED EMBODIMENT OF THE INVENTION

To achieve a better understanding of the invention the new design of non-evaporable getter according to a preferred embodiment will be described next.

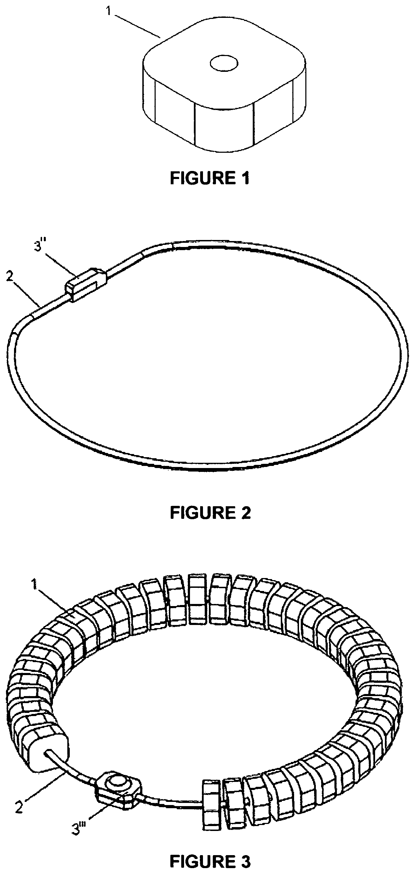

The idea when modifying this assembly begins with the idea of piercing the pads (1), as seen in figure 1, to be able to place a metal cable (2) inside serving as a guide, such as the one shown in figure 2, with a quick-fit closure that can be of various types (3', 3", 3"', 3^{iv}) that will be detailed later. Thus the formation of a single assembly is allowed, such as it is shown in figure 3. In this way having to introduce the getter pads in a sheath, as it has been the case so far, is prevented.

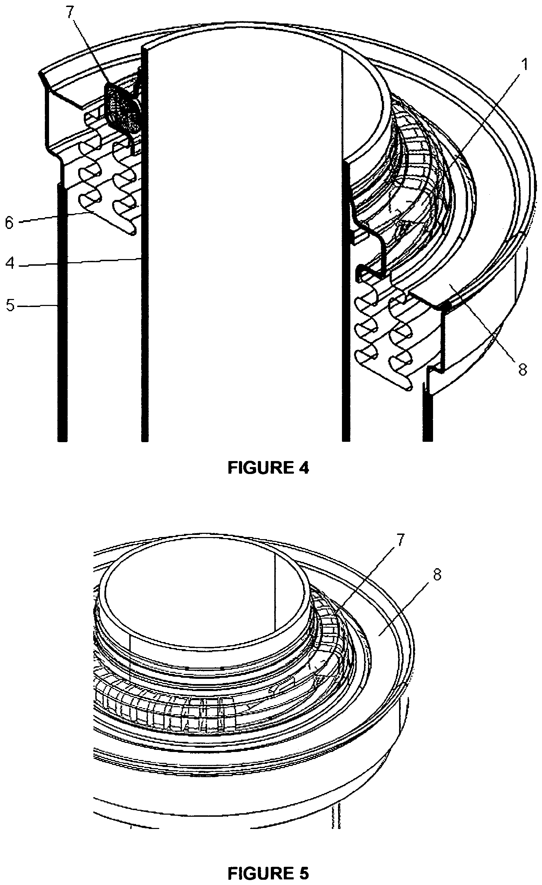

Figure 4 shows the location of the assembly at the end of the receptor tube. In this figure is observed the assembly formed by the pads (1), the metal absorber tube (4) within which the heat-transfer fluid circulates, the glass tube (5), the expansion-compensating device or bellows (6), the vessel (7), the vessel meaning the interface part between the tube (4) and the expansion-compensating device (6) and the cover (8).

The fact of placing the linked getters assembly in an area defined by the vessel (7) allows using in the pads a prismatic shape with rounded edges that makes better use of the space than a cylindrical geometry.

In addition, the ring of linked getters is placed downstream of the expansion-compensating device (6) so it is prevented it being damaged by the waves of the bellows when they work.

It is also checked that in this position the diameter of the ring is much lower than if it was placed radially enveloping the bellows (6), so the diameter of the borosilicate tube (5) can be reduced with the consequent savings.

As for the idea of its assembly the pads (1) are strained by means of a steel cable (2) and the closure of the ring through a quick-fit closure system is carried out (3', 3", 3"', 3^{iv}), such that this operation can be automated. Subsequently this assembly has to be located in the void of the vessel (7), taking advantage of the flexibility of the same.

Different quick-fit closure systems (3', 3", 3"', 3^{iv}) have been envisaged according to functionality (ease of handling), standardization and cost criteria (existing products against own designs).

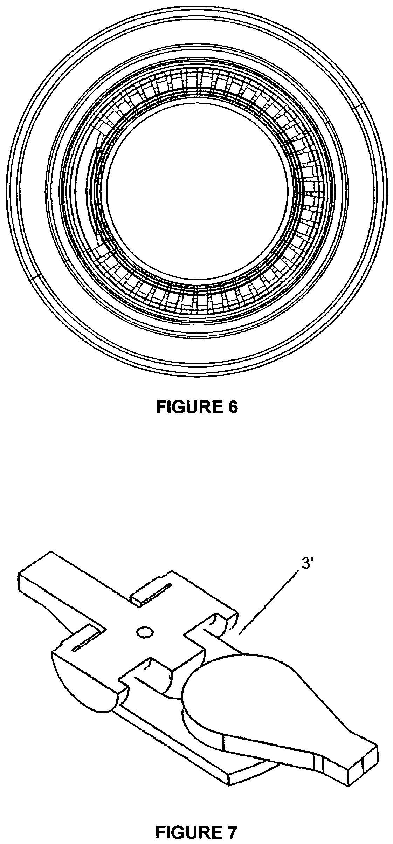

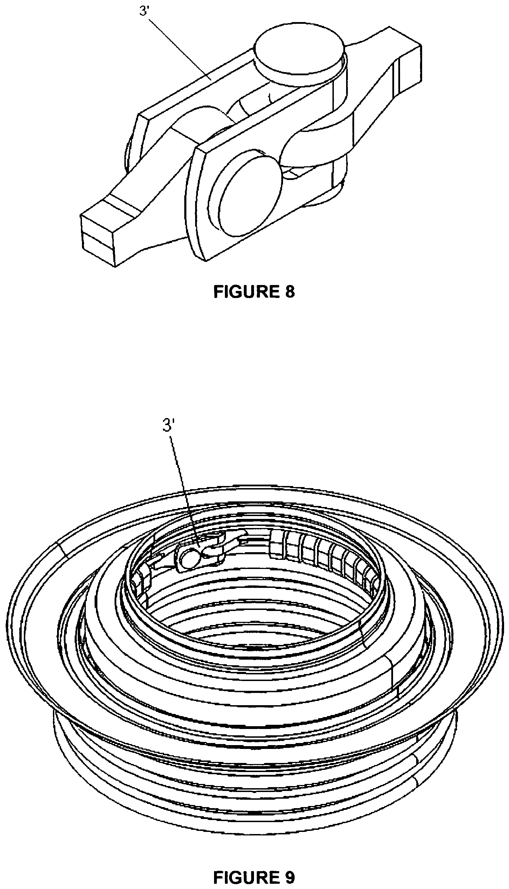

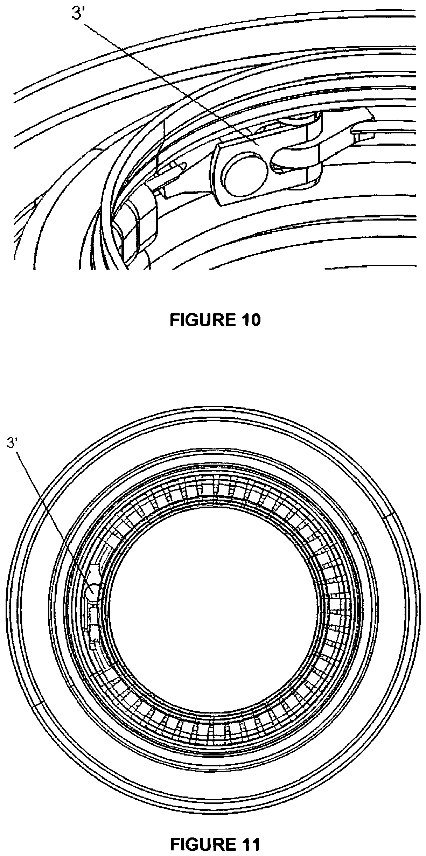

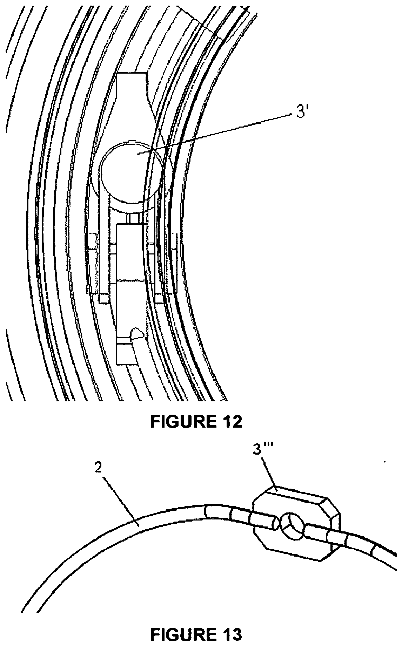

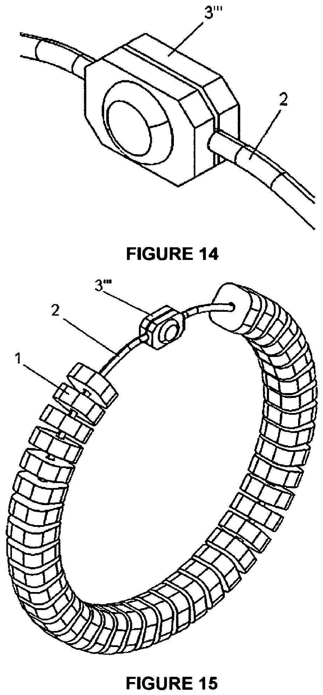

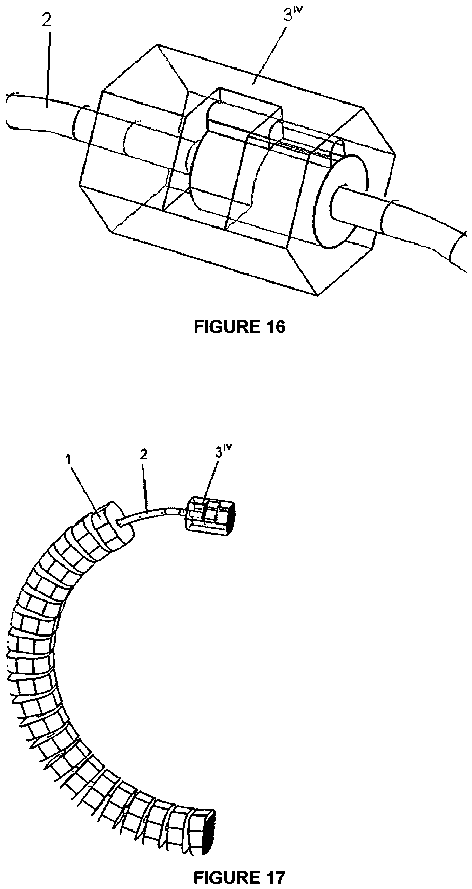

The different possibilities are:
- Quick-fit closure 1 (3') (figures 7 to 12): it is a system similar to that found in the links in the chains of transmission, but in this case using two links in the ends of the cable in which the non-evaporable getter pads are placed so that once these are located, a closed-loop is obtained by placing a pin or rivet between the links.
- Quick-fit closure 2 (3") (figure 2): it is a clip-type system where when pressing with a male piece on a female one, the established tolerances allow guaranteeing the permanent closure of the previous loop.
- Quick-fit closure 3 (3"') (figures 13-15): these are two identical pieces which have at their juncture a negative or female where both ends of the cable that defines the loop are housed. The guarantee of the closure is in the rivet that presses and exerts the compressive stress. The pieces do not make contact on their flat sides so that the efforts are made on the ends of the cable and prevent their slip and release.
- Quick-fit closure 4 (3^{iv}) (figure 16-18): this type of closure consists of two parts welded to the ends of the cables and that are introduced into each other as a lock, so that its geometry generates a device that prevents accidental opening unless it is properly handled.

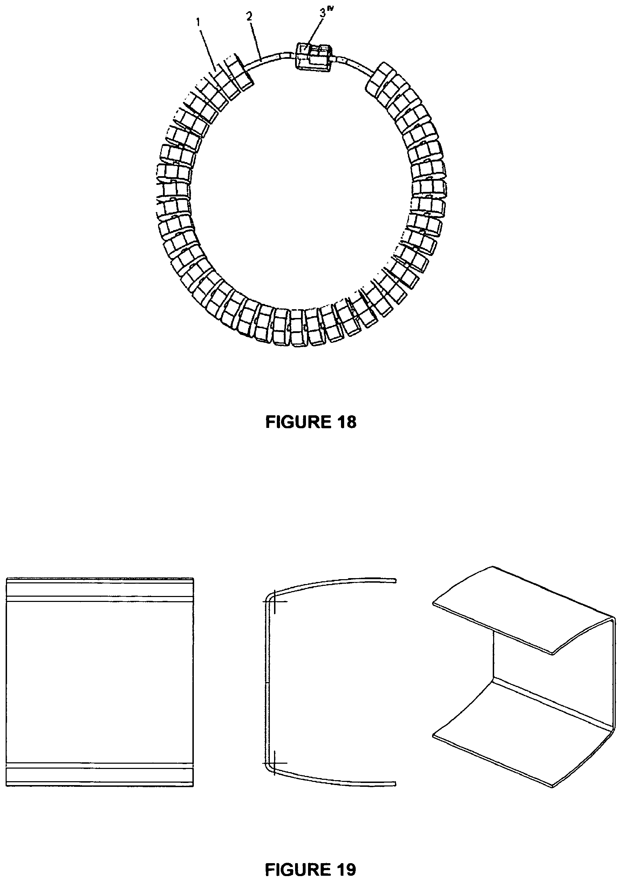

Once assembled and if necessary, a series of attachment clamps (figure 19) that fix the system to the rest of the elements of the absorber tube avoiding possible displacements may be added.

This non-evaporable getter system is designed especially for its application in solar power receptor vacuum tubes, but its extension to other areas of the industry that require similar features is not precluded.

## Claims

1. Non-evaporable getter for solar power -receptor vacuum tubes, comprising a series of non-evaporable getter material pads (1) **characterized in that** the pads (1) are drilled through the centre thereof and linked by means of a cable (2) ending in a quick-fit closure (3', 3", 3"', 3^{iv}).

2. Non-evaporable getter according to claim 1 **characterized in that** the pads (1) have a prism-shaped geometry with rounded corners.

3. Non-evaporable getter according to claim 1 **characterized in that** the cable consists of metal.

4. Non-evaporable getter according to claim 3 **characterized in that** the cable consists of steel.

5. Non-evaporable getter according to claim 1 **characterized in that** the closure (3') comprises two links at the ends of the cable wherein the non-evaporable getter pads are placed so that once these are placed, by placing a pin or rivet between the links, the closed-loop is obtained.

6. Non-evaporable getter according to claim 1 **characterized in that** the closure (3") comprises a clip-type system where when pressing on a female piece with a male piece, the established tolerances allow to guarantee the permanent closure of the loop of the cable where the pads are inserted.

7. Non-evaporable getter according to claim 1 **characterized in that** the closure (3"') comprises two identical pieces which have at their juncture a negative or female where both ends of the cable that defines the loop are housed, wherein the pieces do not make contact and a rivet exerts compressive stress, such that slip and release of the ends of the cable (2) is prevented.

8. Non-evaporable getter according to claim 1 **characterized in that** the closure (3^{iv}) comprises two parts welded to the ends of the cables and that are introduced into each other as a lock, so that its geometry generates a device that prevents accidental opening unless it is properly handled.

9. Solar power receptor vacuum tube comprising an expansion-compensating device in the form of bellows (6), a vessel (7) defining a void, an absorber tube (4) and a non-evaporable getter as defined in claim 1 **characterized in that** the non-evaporable getter is placed downstream of the expansion-compensating device (6) in axial direction and in the void defined by the vessel (7), that is the interface part between the absorber tube (4) and the expansion-compensating device (6).

10. Solar power receptor vacuum tube according to claim 9 **characterized in that** the non-evaporable getter is placed according to a radial distribution in each of the two ends of the receptor tube, resulting in a receptor tube of completely symmetrical geometry.

11. Solar power receptor vacuum tube according to claim 10 **characterized in that** the non-evaporable getter is locked with a series of attachment clamps that fix the non-evaporable getter to the rest of elements of the receptor tube preventing possible displacements.

## Patentansprüche

1. Nicht verdampfbarer Getter für Solarrezeptor-Vakuumröhren, umfassend eine Reihe von nicht verdampfbaren Gettermaterial-Klötze (1), **dadurch gekennzeichnet, dass** die Klötze (1) durch ihre Mitte gebohrt und mittels eines Kabels (2) verbunden sind, das in einem Schnellverschluss (3', 3", 3"', 3^{iv}) endet.

2. Nicht verdampfbarer Getter nach Anspruch 1, **dadurch gekennzeichnet, dass** die Klötze (1) eine prismenförmige Geometrie mit abgerundeten Ecken aufweisen.

3. Nicht verdampfbarer Getter nach Anspruch 1, **dadurch gekennzeichnet, dass** das Kabel aus Metall besteht.

4. Nicht verdampfbarer Getter nach Anspruch 3, **dadurch gekennzeichnet, dass** das Kabel aus Stahl besteht.

5. Nicht verdampfbarer Getter nach Anspruch 1, **dadurch gekennzeichnet, dass** der Verschluss (3') zwei Verbindungsglieder an den Enden des Kabels umfasst wobei die nicht verdampfbaren Getterklötze so angeordnet sind, dass nach dem Platzieren eines Stifts oder Niets zwischen den Verbindungsgliedern die geschlossene Schleife erhalten wird.

6. Nicht verdampfbarer Getter nach Anspruch 1, **dadurch gekennzeichnet, dass** der Verschluss (3") ein klammerartiges System aufweist, bei dem, wenn auf ein weibliches Teil mit einem männlichen Teil gedrückt wird, die festgelegten Toleranzen ermöglichen das dauerhafte Schließen der Kabelschleife, in die die Klötze eingeführt werden.

7. Nicht verdampfbarer Getter nach Anspruch 1, **dadurch gekennzeichnet, dass** der Verschluss (3"') zwei identische Teile aufweist, die an ihrer Verbindungsstelle eine negative oder weibliche Stelle aufweisen, wo beide Enden des Kabels, die die Schleife bilden, untergebracht sind, wobei die Stücke keinen Kontakt herstellen und ein Niet Druckspannung ausübt, so dass ein Rutschen und Lösen der Enden des Kabels (2) verhindert wird.

8. Nicht verdampfbarer Getter nach Anspruch 1, **dadurch gekennzeichnet, dass** der Verschluss (3iv) zwei Teile umfasst, die an die Enden der Kabel angeschweißt sind und die ineinander als ein Schloss eingeführt sind, so dass seine Geometrie eine Vorrichtung erzeugt, die ein versehentliches Öffnen verhindert, es sei denn wird richtig behandelt.

9. Solarrezeptor-Vakuumröhre, umfassend eine Dehnungsausgleichsvorrichtung in Form eines Balgs (6), einen Behälter (7), der einen Hohlraum definiert, ein Absorberrohr (4) und einen nicht verdampfbaren Getter, wie in Anspruch 1 definiert, **dadurch gekennzeichnet, dass** der nicht verdampfbare Getter stromabwärts der Dehnungsausgleichsvorrichtung in Form eines Balgs (6) in axialer Richtung und in dem durch den Behälter (7) definierten Hohlraum das ist der Schnittstellenteil zwischen dem Absorberrohr (4) und der Dehnungsausgleichsvorrichtung (6).

10. Solarrezeptor-Vakuumröhre nach Anspruch 9, **dadurch gekennzeichnet, dass** der nicht verdampfbare Getter entsprechend einer radialen Verteilung in jedem der beiden Enden des Rezeptorrohrs angeordnet ist, was zu einem Rezeptorrohr mit vollständig symmetrischer Geometrie führt.

11. Solarrezeptor-Vakuumröhre nach Anspruch 10, **dadurch gekennzeichnet, dass** der nicht verdampfbare Getter mit einer Reihe von Befestigungsdämpfern verriegelt ist, die den nicht verdampfbaren Getter an den übrigen Elementen des Rezeptorrohrs befestigen und mögliche Verschiebungen verhindern.

## Revendications

1. Getter non évaporable pour tubes à vide à récepteur solaire, comprenant une série de plots en matériau getter non évaporable (1), **caractérisé en ce que** les plots (1) sont percés au centre de ceux-ci et reliés au moyen d'un câble (2) se terminant par une fermeture à ajustement rapide (3', 3", 3"', 3^{iv}).

2. Getter non évaporable selon la revendication 1, **caractérisé en ce que** les plots (1) ont une géométrie en forme de prisme avec des coins arrondis.

3. Getter non évaporable selon la revendication 1, **caractérisé en ce que** le câble est en métal.

4. Getter non évaporable selon la revendication 1, **caractérisé en ce que** le câble est en acier.

5. Getter non évaporable selon la revendication 1, **caractérisé en ce que** la fermeture (3') comporte deux maillons aux extrémités du câble dans lesquels sont placés les plots de getter non évaporables afin que, une fois celles-ci placées, en plaçant une épingle ou un rivet entre les maillons, la boucle fermée est obtenue.

6. Getter non évaporable selon la revendication 1, **caractérisé en ce que** la fermeture (3") comprend un système de type à pince où, en appuyant sur une pièce femelle avec une pièce mâle, les tolérances établies permettent de garantir la fermeture permanente de la boucle du câble où les plots sont insérés.

7. Getter non évaporable selon la revendication 1, **caractérisé en ce que** la fermeture (3"') comprend deux pièces identiques qui ont à leur joint un négatif ou une femelle où sont logées les deux extrémités du câble qui délimite la boucle, dans lequel les pièces ne font pas contact et un rivet exerce une contrainte de compression, de sorte que le glissement et le relâchement des extrémités du câble (2) sont empêchés.

8. Getter non évaporable selon la revendication 1, **caractérisé en ce que** la fermeture (3^{iv}) comprend deux parties soudées aux extrémités des câbles et qui sont introduites l'une dans l'autre sous forme de serrure, de sorte que sa géométrie génère un dispositif empêchant toute ouverture accidentelle à moins qu'elle est correctement manipulé.

9. Tube à vide à récepteur d'énergie solaire comprenant un dispositif compensateur de dilatation sous la forme d'un soufflet (6), une cuve (7) définissant un vide, un tube absorbeur (4) et un getter non évaporable selon la revendication 1, **caractérisé en ce que** le getter non évaporable est placé en aval du dispositif compensateur de dilatation sous la forme d'un soufflet (6) dans le sens axial et dans le vide défini par la cuve (7), c'est-à-dire la partie interface entre le tube absorbeur (4) et le dispositif de compensation de dilatation (6)..

10. Tube à vide à récepteur d'énergie solaire selon la revendication 9, **caractérisé en ce que** le getter non évaporable est placé selon une distribution radiale dans chacune des deux extrémités du tube récepteur, ce qui donne un tube récepteur de géométrie complètement symétrique.

11. Tube à vide à récepteur d'énergie solaire selon la revendication 10, **caractérisé en ce que** le getter non évaporable est bloqué avec une série d'amortisseurs de fixation qui fixent le getter non évaporable au reste des éléments du tube récepteur empêchant des déplacements possibles.
